# FASCICULE DE BREVET EUROPEEN

(11) **EP 3 589 797 B1**
(45) Date de publication et mention de la délivrance du brevet: **30.09.2026**
(21) Numéro de dépôt: 18712949.9
(22) Date de dépôt: 02.03.2018
(51) Int. Cl.: E04F 15/12, E04F 13/02, H05B 3/02, H05B 3/14, C04B 14/02, C04B 22/00

(54) **REVETEMENT DE FINITION POUR SOL OU ENDUIT MURAL D'INTERIEUR CHAUFFANT**
OBERFLÄCHENBESCHICHTUNG FÜR BEHEIZTE INNENWANDVERKLEIDUNGEN ODER BÖDEN
FINISHING COATING FOR HEATED INDOOR WALL LINING OR FLOOR

(30) Priorité: 03.03.2017 FR 1751732
(43) Date de publication de la demande: 08.01.2020
(73) Titulaire: SAINT-GOBAIN WEBER, 94370 Sucy-en-Brie (FR)
(72) Inventeur: MABROUK, Elyes, 75018 Paris (FR); HESSELBARTH, Franck, 45659 Recklinghausen (DE); JURASCHEK, Jan, 34117 Kassel (DE); SANTAGATI, Valeria, 34117 Kassel (DE); POLSTER, Roman, 34119 Kassel (DE); KLOOSTER, Thorsten, 10969 Berlin (DE)
(74) Mandataire: Saint-Gobain Recherche
(86) Numéro de dépôt international: PCT/FR2018/050484
(87) Numéro de publication internationale: WO 2018/158547

(56) Documents cités:
- EP-B1- 1 259 363
- WO-A1-2005/064240
- JP-A- H06 231 868
- JP-A- H11 237 063
- JP-A- S5 534 146
- KR-A- 20100 069 732
- US-A- 5 378 279
- US-A1- 2004 062 606

## Description

La présente invention porte sur un revêtement de finition chauffant ou un enduit d'intérieur chauffant fait à partir d'une composition de mortier conducteur électrique pour des applications intérieures, telles que des sols décoratifs ou des enduits muraux de finition. L'invention porte également sur un procédé de fabrication d'un tel revêtement ou enduit chauffant. Les revêtements de finition ou les enduits muraux de finition doivent notamment répondre à certains critères d'esthétisme puisqu'ils représentent la partie visible de la surface du sol ou du mur. Lorsque les systèmes sont composés de plusieurs couches, le revêtement ou enduit de finition est une des couches les plus externes, voire la plus externe du système.

Les planchers ou sols chauffants offrent de nombreux avantages. Ils permettent notamment d'améliorer la sensation de confort en produisant une chaleur plus homogène dans toute la pièce, comparativement à ce qu'on peut obtenir avec des éléments de chauffage muraux tels que des radiateurs classiques. Ils permettent notamment d'optimiser l'espace et l'esthétique dans une habitation puisqu'ils ne se voient pas et permettent de supprimer les radiateurs parfois imposants. Ils présentent également l'avantage d'être énergétiquement économiques. Actuellement, il existe deux technologies principales pour réaliser des sols ou planchers chauffants. Certains systèmes sont des planchers chauffants hydroniques qui diffusent la chaleur par l'intermédiaire d'un réseau de tubes formant des serpentins dans lesquels circule de l'eau chaude. Les serpentins, généralement installés sur un isolant thermique, sont incorporés dans une chape ou dalle dont l'épaisseur est le plus souvent de 35 à 60 mm et qui est ensuite recouverte d'un revêtement de finition. D'autres systèmes sont des planchers chauffants électriques qui diffusent la chaleur par l'intermédiaire d'un réseau de câbles conducteurs électriques formant des serpentins généralement placés sous le revêtement de finition. Ces systèmes sont moins éloignés de la surface que les réseaux hydroniques ce qui permet de compenser la plus faible puissance qu'ils délivrent comparativement aux systèmes sus-mentionnés. Le réseau électrique est généralement positionné sur un isolant thermique et sur une chape ou ragréage permettant d'obtenir un état de surface adéquat à sa pose. Un revêtement ou enduit de finition est ensuite appliqué sur le réseau électrique.

Les revêtements de finition utilisés dans les systèmes actuels sont de différents types (carrelage, parquet, revêtement de sols décoratifs) en fonction du type de pièce et de l'application choisie.

Les revêtements pour sols décoratifs à base mortier sont notamment très recherchés pour des applications tertiaires ou dans des locaux commerciaux où il est nécessaire d'associer l'aspect décoratif (brillance et/ou coloration) et l'aspect fonctionnel (très grande résistance et facilité d'application). Ils sont également de plus en plus populaires dans le domaine résidentiel où ils apportent une esthétique et un confort nouveau. Ce type de revêtement dont l'épaisseur est classiquement comprise entre 5 et 15 mm peut notamment être appliqué, comme tout autre revêtement, sur un plancher chauffant hydronique ou électrique.

Dans les systèmes chauffants actuels, les couches de mortier utilisées, que ce soit pour réaliser la chape ou éventuellement le revêtement de finition, ne participent pas activement au chauffage, puisque les éléments chauffants proprement dits sont les serpentins (conducteurs électriques ou tuyaux d'eau chaude). Ces serpentins doivent transmettre leur chaleur à et au travers des différents éléments passifs du système. Par ailleurs, de par la configuration de ces systèmes, les éléments chauffants sont relativement éloignés de la surface puisqu'ils sont placés sous le revêtement, voire éventuellement sous une chape. Cette configuration entraîne un temps d'induction relativement long et un risque de chauffage inhomogène sur la totalité de la surface, notamment au niveau des bordures de la pièce. L'inertie de ces systèmes peut créer un déphasage important débouchant sur une impression d'inconfort pour les utilisateurs, et un coût de chauffage important. De plus, ces systèmes présentent l'inconvénient d'être difficiles à installer, aussi bien dans la complexité de leur installation que dans le nombre d'éléments nécessaires. Pour une bonne efficacité, les serpentins doivent recouvrir la plus grande partie de la pièce et doivent être relativement proches pour obtenir le confort recherché. Dans les systèmes chauffants de type hydronique, les serpentins sont espacés d'environ 10 à 20 cm. Dans les systèmes chauffants électriques, les serpentins doivent être beaucoup plus rapprochés et l'espacement entre chaque câble est de l'ordre du centimètre. Le documents EP 1 259 363 B1 décrit un revêtement avec couche chauffante dissociée.

La présente invention porte sur un nouveau système de chauffage dans lequel le revêtement ou l'enduit de finition décoratif est directement l'élément chauffant.

Le revêtement de finition pour sol ou enduit mural d'intérieur chauffant selon la présente invention est constitué d'une couche chauffante positionnée sur un support, obtenue par durcissement d'une composition de mortier hydraulique comprenant au moins un liant hydraulique et au moins un composé conducteur électrique, ladite couche étant en contact avec un câblage linéaire de fils conducteurs électriques alimenté par un courant continu ayant une tension maximale de 60 V.

Le but de l'invention étant de chauffer une habitation, on entend par « sol » le sol d'une pièce, donc situé à l'intérieur d'une habitation.

L'invention a encore pour objet un sol d'une pièce comprenant un support sur lequel est disposé un câblage linéaire de fils conducteurs électriques alimenté par un courant continu ayant une tension maximale de 60 V, et, en contact avec ledit câblage, un revêtement de finition constitué d'une couche chauffante positionnée sur ledit support et obtenue par durcissement d'une composition de mortier hydraulique comprenant au moins un liant hydraulique et au moins un composé conducteur électrique.

Grâce au revêtement ou enduit selon l'invention, les serpentins hydroniques placés dans la chape située sous le revêtement de finition ou les serpentins électriques habituellement placés sous le revêtement de finition ne sont ainsi plus nécessaires. Les composants actifs pour le chauffage sont directement dans la couche constituant le revêtement ou l'enduit de finition. Le revêtement ou enduit de finition selon l'invention donne ainsi aux utilisateurs une sensation de confort thermique dans la pièce, puisque la couche chauffante est la couche la plus externe, ou une couche très proche de la surface si une couche supplémentaire ayant une fonction esthétique est éventuellement ajoutée sur le revêtement ou l'enduit de finition. La totalité de la surface du sol ou mur recouvert par le revêtement ou l'enduit de finition participe donc de façon active au chauffage de la pièce, renforçant la sensation de chauffage homogène. Les temps d'induction du chauffage sont également limités et les coûts moins élevés. En effet, le revêtement ou enduit de finition produit lui-même de la chaleur par effet Joule en transformant le courant électrique traversant la couche de mortier en chaleur. La source de chaleur étant positionnée directement à la surface, la chaleur n'a pas à traverser plusieurs millimètres d'épaisseur de chape et/ou de revêtements passifs.

La composition de mortier permettant d'obtenir le revêtement ou l'enduit de finition selon la présente invention possède une résistance électrique compatible avec une tension d'alimentation de 60 V maximum et un réseau de câblage ponctuel ou linéaire nettement moins important que les réseaux de serpentins décrits dans les systèmes connus actuellement. Le câblage linéaire de fils conducteurs est de préférence alimenté sur les zones périphériques de la surface du sol ou du mur par un courant continu ayant une tension maximale de 60 V. De préférence, l'alimentation est faite au niveau de la partie de la surface du sol ou du mur proche du support à revêtir.

Ces fils sont de préférence des fils métalliques fins ou des bandes métalliques fines, par exemple de moins de 5 mm de diamètre ou de largeur, et sont par exemple en cuivre. Ils sont positionnés au sein ou au contact du revêtement ou de l'enduit de finition. Ils sont de préférence espacés les uns des autres d'au moins 0,2 m, voire préférentiellement d'une distance comprise entre 0,5 m et 1,5 m, notamment entre 0,5 et 1 m. L'espacement entre deux fils est avantageusement d'au plus 1,5 m.

Le câblage linéaire de fils conducteurs est de préférence positionné sur le support destiné à recevoir le revêtement ou l'enduit de finition. Dans ce cas, le câblage est noyé dans le revêtement ou dans l'enduit.

La puissance thermique dissipée par unité de surface (encore appelée ci-après puissance surfacique) par ladite couche chauffante est de préférence supérieure à 20 W/m². La puissance thermique optimale dissipée par unité de surface par ladite couche chauffante est d'environ 100 W/m². Au niveau des zones périphériques où un besoin de chauffage plus important peut se faire sentir (par exemple à proximité d'une fenêtre), cette puissance peut toutefois varier jusqu'à 150 W/m² pour un chauffage optimal, ce qui peut être obtenu en diminuant la distance entre les fils métalliques. Ainsi, avec une alimentation maximale de 60 V, il est possible, grâce au revêtement ou à l'enduit chauffant selon la présente invention, d'obtenir une température maximale de la couche chauffante de l'ordre de 40°C, de préférence de 30°C. Cette température est ajustée notamment en fonction de la taille de la pièce à chauffer et des souhaits de l'utilisateur en matière de température.

En considérant que l'espacement entre les câbles est défini par une longueur L, la résistance R en Ω, mesurée sur une largeur l et sur une épaisseur e considérée comme faible par rapport à la longueur L et à la largeur l, s'exprime de la façon suivante, en fonction de la résistance surfacique Rₛᵤᵣ exprimée en Ω : $R = {R}_{sur} \frac{L}{l}$ ${R}_{sur} = r / e$ où r est la résistivité exprimée en Ω.m.

La puissance dissipée par effet Joule, notée P et exprimée en Watt, s'exprime, en fonction de la tension U et de l'intensité I du courant, de la façon suivante : $P = U . I = \frac{{U}^{2}}{R} = \frac{{U}^{2}}{{R}_{sur}} \frac{l}{L}$ $\frac{l}{L} = f$ étant appelé facteur de forme de l'échantillon sur lequel la mesure est effectuée.

La puissance Pₛᵤᵣ dissipée par unité de surface, exprimée en W/m², s'exprime donc de la façon suivante : ${P}_{sur} = \frac{P}{l . L} = \frac{{U}^{2}}{{R}_{sur}} \frac{1}{{L}^{2}}$

A partir de cette équation (3), il est possible de déterminer la résistance surfacique que doit avoir la couche chauffante, en fonction du dimensionnement de la pièce et notamment de l'espacement L des câbles et de la tension appliquée pour délivrer la puissance surfacique souhaitée.

A titre d'exemple, si la tension appliquée est très faible, par exemple de 5 V et que les câbles sont relativement éloignés (distants d'une distance L=1,5 m), la résistance surfacique de la couche doit être de 0,1 Ω pour obtenir une puissance surfacique dissipée de 100 W/m². Si la tension est augmentée jusqu'à la valeur de 60 V et que la distance entre les câbles est plus petite (L=0,2 m), pour obtenir la même puissance surfacique dissipée, la couche chauffante doit avoir une résistance surfacique de 900 Ω. Si les câbles sont distants d'une longueur L=1 m, dans les mêmes configurations de tension appliquée et de puissance dissipée recherchée (U=60 V et Pₛᵤᵣ=100 W/m²), la résistance surfacique doit être de 36 Ω.

Expérimentalement, les valeurs de résistance sont mesurées à l'aide d'un ohm-mètre sur des échantillons de type éprouvette d'une taille définie. A partir de l'équation (1), en connaissant la résistance surfacique que doit avoir la couche chauffante pour dissiper la puissance surfacique attendue, la résistance R de l'éprouvette, exprimée en Ω, s'exprime par : $R = {R}_{sur} \frac{L}{W} = \frac{{R}_{sur}}{f}$ où f est le facteur de forme défini ci-avant prenant en compte la taille de l'échantillon.

Ainsi, si on cible une résistance surfacique de 36 Ω pour obtenir une puissance surfacique dissipée de 100 W/m² avec une tension de 60 V, si le facteur de forme vaut 1, la résistance mesurée sur l'échantillon doit être de 36 Ω. Si le facteur de forme vaut 0,5, elle doit être de 72 Ω.

De préférence, la résistance surfacique de la couche chauffante est comprise dans un domaine allant de 15 à 150 Ω. Comme indiqué précédemment, la résistance surfacique est la résistance d'une couche formant un carré de 1 m de côté.

Le revêtement de finition forme une résistance électrique et ainsi par application d'une tension maximale de 60 V convertit l'énergie électrique en chaleur par effet Joule. Il constitue un système de chauffage actif en lui-même simple à mettre en place et pratique d'utilisation. Il permet un chauffage rapide et homogène du sol et/ou du mur et donc une sensation de confort thermique pour les occupants de la pièce. La tension de 60 V est par exemple appliquée par l'intermédiaire d'un transformateur, lui-même branché directement sur le circuit d'électricité domestique.

L'épaisseur du revêtement de finition est de préférence comprise entre 2 et 20 mm. Il s'agit donc d'une couche chauffante d'épaisseur plus fine que celles des dalles ou chapes utilisés dans les systèmes chauffants actuellement sur le marché et qui sont plutôt de l'ordre de 30 à 50 mm. A titre d'exemple, lorsque le revêtement de finition est un revêtement pour sol chauffant, son épaisseur est comprise entre 5 et 20 mm. Pour les enduits muraux de finition, l'épaisseur est par exemple de 2 à 5 mm. L'équation (2) qui relie la résistance surfacique, la résistivité et l'épaisseur montre que, si la résistance surfacique est de 36 Ω, pour une épaisseur de couche chauffante de 20 mm, la résistivité doit être au maximum de 0,72 Ω.m.

Le revêtement ou enduit selon la présente invention peut être recouvert d'une fine couche à fonction esthétique, par exemple une couche de peinture, une couche de mastic, une couche de papier peint, une couche de mortier ou une couche de carrelage. Cette couche a une épaisseur très fine, typiquement de moins de 2 mm, ou de moins de 10 mm pour une couche de carrelage. Son but est essentiellement un but esthétique, par exemple pour corriger des défauts de planéité qui pourraient éventuellement apparaître à la surface du revêtement ou de l'enduit de finition chauffant. Cette fine couche peut notamment donner un aspect brillant. Le système chauffant reste ainsi très proche de la surface du sol ou du mur.

Le revêtement ou enduit de finition décoratif est obtenu par durcissement d'une composition de mortier hydraulique. La composition de mortier hydraulique contient de l'eau qui participe à la prise du liant hydraulique et au durcissement du revêtement ou de l'enduit. La composition de mortier comprend au moins un composé conducteur électrique, qui est de préférence choisi parmi les composés carbonés, les éléments métalliques non carbonés et/ou d'autres minéraux conducteurs. Ce composé conducteur présent au sein de la couche de revêtement ou d'enduit de finition participe de façon active au chauffage de la couche.

Le composé conducteur électrique peut être un composé carboné choisi parmi le graphite, le noir de carbone, et/ou le coke, se présentant sous la forme de particules, de poudre ou de fibre. De façon avantageuse, ce composé est présent en quantité limitée en raison de sa coloration noire et de sa capacité à absorber l'eau. La composition de mortier hydraulique comprend avantageusement entre 3 et 10% en poids, de préférence entre 3 et 6% en poids du composé carboné par rapport à son poids total. Le composé carboné est préférentiellement du graphite, se présentant sous la forme de particules dont le diamètre moyen est supérieur à 100 µm et de préférence inférieur à 1800 µm. Très préférentiellement, le composé carboné se présente sous la forme de particules dont le diamètre moyen est compris entre 800 et 1200 µm. Cette forme permet de conserver les propriétés à la fois rhéologiques et esthétiques du revêtement ou enduit de finition.

Le composé conducteur électrique peut être un élément métallique non carboné de préférence choisi parmi l'aluminium, le cuivre, le titane, le fer ainsi que des alliages tel que l'acier, sous forme de fibres ou de poudre.

Le composé conducteur électrique peut être un minéral conducteur choisi parmi la bentonite et/ou la marconite et ayant de préférence un diamètre moyen de particules compris entre 100 µm et 1000 µm. La composition de mortier hydraulique peut comprendre entre 10% et 45% en poids de minéral conducteur par rapport à son poids total. Ce minéral permet à la fois de jouer le rôle de granulat et donc d'améliorer la résistance mécanique de la couche de mortier et de participer à la conductivité électrique et par conséquent au chauffage.

La composition de mortier hydraulique peut comprendre également des fillers calcaires, siliceux et/ou siliceux calcaires.

Elle peut avantageusement comprendre des cendres volantes. Ces particules sont, de par leur composition, riches en carbone et favorisent la conductivité au sein de la couche de mortier. Ce sont des particules fines dont le diamètre moyen est généralement inférieur à 50 µm. Leur nature minéralogique leur confère des propriétés pouzzolaniques. La composition de mortier hydraulique peut comprendre entre 20 et 40% en poids de cendres volantes, par rapport à son poids total. Les cendres volantes permettent avantageusement de participer à la diminution de la résistance électrique du revêtement ou de l'enduit de finition, notamment en diminuant la porosité de la couche de mortier.

De façon avantageuse, la composition de mortier hydraulique utilisée pour le revêtement ou l'enduit de finition selon la présente invention comprend le mélange de graphite particulaire, de cendres volantes et de granulat conducteur tel que la bentonite ou la marconite. L'association de ces trois constituants permet notamment d'obtenir une couche de mortier qui une fois durcie présente une résistance électrique suffisamment faible pour l'application chauffante recherchée. Par exemple, la composition de mortier hydraulique comprend entre 3 et 10 % en poids de graphite particulaire dont la taille des particules est comprise entre 500 et 1800 µm, de 10 à 45% en poids d'un minéral conducteur choisi parmi la bentonite et/ou la marconite et dont le diamètre moyen des particules est compris entre 100 et 1000 µm et entre 20 et 40% en poids de cendres volantes. L'association de particules conductrices de diamètres différents permet en particulier de créer un réseau structurel favorisant de manière synergétique leur conductivité intrinsèque et ainsi de diminuer la résistance de la couche de mortier. Il s'est en effet avéré que l'association des trois composés conducteurs susmentionnés, en particulier dans les tailles et les teneurs indiquées, permettait d'atteindre une résistivité plus faible que lorsqu'un ou deux constituants étaient présents, probablement du fait d'une plus grande connectivité du réseau.

Le liant hydraulique est de préférence un liant minéral choisi parmi les ciments Portland, les ciments de mélange comprenant des cendres volantes, des laitiers, des pouzzolanes naturelles ou calcinées, les ciments alumineux, les ciments sulfoalumineux, les ciments belitiques, la chaux hydraulique et/ou le sulfate de calcium sous forme anhydrite et/ou hémihydrate, seuls ou en mélange.

Avantageusement, la composition de mortier hydraulique comprend en outre des additifs tels que des agents rhéologiques comme les plastifiants ou les superplastifiants, des agents fluidifiants, des agents rétenteurs d'eau, des agents épaississants, des agents de protection biocides et/ou fongicides, des agents dispersants, des pigments organiques et/ou inorganiques, des accélérateurs et/ou retardateurs de prise, des agents hydrofuges, des agents anti-moussants ou des fibres. Ces différents additifs permettent de donner au mortier hydraulique la consistance et les propriétés adéquates avec les applications visées. Par exemple, une composition pour mortier pour revêtement de finition pour sol chauffant peut comprendre un agent fluidifiant permettant d'obtenir un revêtement autonivelant. La quantité de ces additifs peut représenter jusqu'à 5% en poids du poids total de la composition de mortier hydraulique.

La composition de mortier ne comprend de préférence pas de résine époxy. Avantageusement, elle ne comprend pas de poudre de verre.

La composition de mortier se présente généralement sous la forme d'un produit pulvérulent sec qui, au moment de l'application sur le chantier, est mélangé avec de l'eau (gâchage) pour obtenir la composition de mortier hydraulique. La composition de mortier hydraulique comprend une quantité d'eau adéquate pour ne pas créer une trop grande quantité de vides dans la couche de mortier durcie et ainsi ne pas diminuer la conductivité au sein de cette couche. A titre d'exemple, la composition de mortier hydraulique comprend entre 10 et 20% de son poids total en eau.

La présente invention porte également sur un procédé de fabrication d'un revêtement de finition ou d'enduit mural de finition chauffant sur un support, comprenant les étapes de :
- positionnement d'un câblage linéaire de fils conducteurs, sur le support destiné à recevoir le revêtement ou l'enduit de finition, et connecté à une source d'alimentation électrique continue délivrant une tension maximale de 60V,
- application sur le support de la composition de mortier hydraulique,
- durcissement de la composition de mortier hydraulique pour former le revêtement de finition ou l'enduit mural de finition.

Le support est par exemple une dalle, une chape (dans le cas d'un revêtement de finition de sol) ou un mur intérieur (dans le cas d'un enduit mural intérieur). Une couche d'isolant thermique peut être positionnée, soit directement sous la couche de mortier chauffante donc directement sous le revêtement ou l'enduit de finition, soit plus en profondeur dans la construction, donc sous le support.

L'application de la composition de mortier hydraulique peut se faire par coulage, ou par projection, de façon manuelle ou automatisée. L'épaisseur du revêtement de finition est avantageusement comprise entre 2 et 20 mm, de préférence entre 5 et 15 mm, en fonction de l'application visée. A titre d'exemple, lorsque le revêtement de finition est un revêtement pour sol chauffant l'épaisseur est comprise entre 5 et 20 mm. Pour les enduits muraux de finition, l'épaisseur est par exemple de 2 à 5 mm.

Le câblage linéaire dans le procédé selon la présente invention est constitué de fils métalliques conducteurs, qui peuvent être typiquement des fils ou des bandes métalliques. L'effet Joule produit par le câblage électrique lui-même est très faible et ne participe donc pas à la production de chaleur, contrairement au système de chauffage électrique classique utilisé pour les sols chauffants et qui met en œuvre des réseaux de câbles beaucoup plus importants. Le revêtement de finition représente en effet le système actif en lui-même. Les fils conducteurs sont répartis sur le support à revêtir, l'espace entre les fils étant avantageusement d'au moins 0,2 m et de préférence compris entre 0,5 m et 1 m. L'espacement du câblage est donc beaucoup plus important que dans les systèmes en réseau connus actuellement sur le marché, ce qui constitue une facilité d'installation et également un avantage économique. La répartition du câblage de fils conducteurs est effectuée en fonction de la résistance surfacique du revêtement de finition ou de l'enduit de finition, du voltage d'alimentation, de la taille de la pièce et du niveau de chauffage requis.

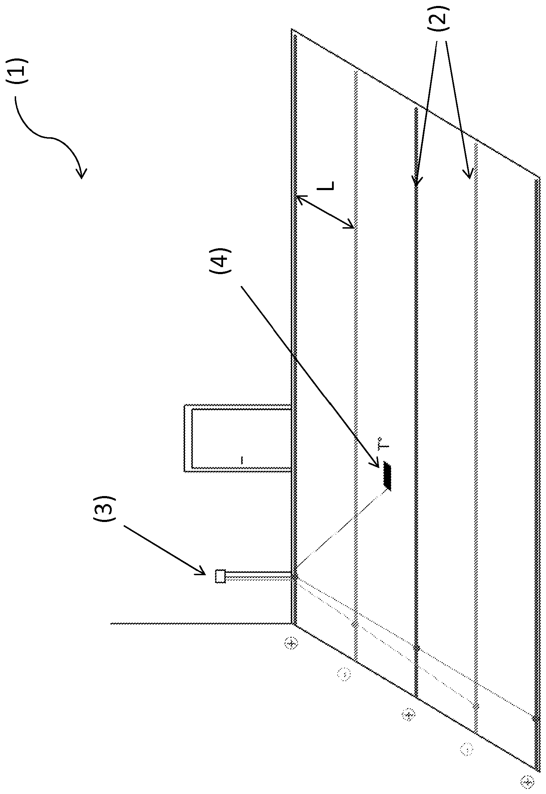

La figure 1 donne une représentation schématique d'une pièce (1) comprenant un revêtement de finition de sol selon la présente invention. Les fils conducteurs (2) espacés d'une distance L sont représentés sur cette figure. Ils sont placés sous le revêtement de finition selon la présente invention. L'alimentation des fils conducteurs est effectuée par l'intermédiaire d'un interrupteur (3). Un capteur de température (4) placé au centre de la pièce permet la régulation.

Les exemples ci-après illustrent l'invention sans en limiter la portée.

Des compositions de mortier hydraulique ont été préparées en mélangeant des composants pulvérulents avec de l'eau de gâchage. Les quantités de chacun des composants sont données dans le tableau ci-dessous, en pourcentage massique par rapport au poids total de la composition de mortier hydraulique.

| | Composition 1 | Composition 2 | Composition 3 |
|---|---|---|---|
| eau | 13,05 % | 11,70% | 13,33% |
| liant ternaire (Ciment Portland, Ciment alumineux, CaSO₄) | 6.3% | 5,2% | |
| liant hydraulique (Ciment Portland ) | - | - | 7,28% |
| Filler | 18,35% | 17,3% | 17,23% |
| Additifs comme superplastifiant | 4,12% | 3,70% | 4,21% |
| Granulat conducteur (Marconite) | 27,61% | 36,00% | 17,95% |
| Graphite particulaire diamètre moyen 1,2 mm (Sigratherm^{®} GFG1200) | 5,02% | 3,60% | 4,10% |
| Cendres volantes (EFA-Füller HP) | 25,1% | 22,50% | 35,90% |

Les compositions de mortier hydraulique ainsi préparées ont été appliquées sous la forme d'éprouvettes rectangulaires de dimension 0,38 m x 0,2 m et d'une épaisseur de 8 mm. Le facteur de forme correspondant à cet échantillon est donc de 0,53.

A titre d'exemple, pour obtenir une puissance délivrée de 100 W/m², dans la configuration où une tension de 60 V est appliquée et un espacement des câbles dans la pièce de 1 m, la couche chauffante doit avoir une résistance surfacique Rₛᵤᵣ de 36 Ω (équation (3)). Cette condition, ramenée à cette taille d'échantillon de facteur de forme 0,53 indique qu'il est nécessaire que la résistance de l'éprouvette soit inférieure à 68,4 Ω (équation (1)).

La résistance de chacune des éprouvettes durcie est mesurée après un temps de durcissement de 28 jours et est donnée dans le tableau ci-dessous.

| | Composition 1 | Composition 2 | Composition 3 |
|---|---|---|---|
| Résistance en Ω | 15 | 23 | 15 |

Les résistances obtenues pour chacune de ces compositions sont bien inférieures à 68,4 Ω. Il est donc possible de d'obtenir un revêtement de finition chauffant dissipant une puissance de 100 W/m², donc permettant d'obtenir une température de l'ordre de 30°C après 30 minutes d'alimentation continue (60 V), à partir de ces compositions de mortier hydraulique.

Ces compositions permettent également de maintenir une puissance surfacique dissipée de 100 W/m², en appliquant une tension de 10 V, donc basse, à condition que l'espacement entre les câbles soit minimum, c'est-à-dire de 0,2 m.

A titre de comparaison, une composition identique à la composition 1 en termes de constituants et de ratio liants/fillers et liant/additifs mais exempte de tout granulat conducteur et de cendres volantes, permet d'obtenir une éprouvette dont la résistance, mesurée dans les mêmes conditions, est supérieure à 1000 Ω (limite de détection du ohm-mètre utilisé).

Les éprouvettes ayant une épaisseur de 8 mm, les équations (1) et (2) permettent de déterminer la résistivité des échantillons de composition 1 à 3 qui est bien inférieure à 0,72 Ω.m.

## Revendications

1. Revêtement de finition pour sol ou enduit mural d'intérieur, **caractérisé en ce qu'**il est constitué d'un câblage linéaire de fils conducteurs électriques (2) et d'une couche chauffante positionnée sur un support et obtenue par durcissement d'une composition de mortier hydraulique comprenant au moins un liant hydraulique et au moins un composé conducteur électrique, ladite couche étant en contact avec ledit câblage alimenté par un courant continu ayant une tension maximale de 60 V.

2. Revêtement ou enduit selon la revendication précédente, tel que les fils conducteurs électriques (2) sont espacés les uns des autres d'une distance d'au moins 0,2 m, de préférence d'une distance comprise entre 0,5 m et 1,5 m.

3. Revêtement ou enduit selon l'une des revendications précédentes, tel que les fils conducteurs (2) sont des fils métalliques fins ou des bandes métalliques fines, par exemple de moins de 5 mm de diamètre ou de largeur, par exemple en cuivre.

4. Revêtement ou enduit selon l'une des revendications précédentes, tel que le câblage linéaire est alimenté sur les zones périphériques de la surface du sol ou du mur par un courant continu ayant une tension maximale de 60 V, de préférence au niveau de la partie de la surface du sol ou du mur proche du support à revêtir.

5. Revêtement ou enduit selon l'une des revendications précédentes, tel que la puissance surfacique dissipée par ladite couche est supérieure à 20 W/m².

6. Revêtement ou enduit selon la revendication précédente, tel que la puissance surfacique dissipée par ladite couche est d'environ 100 W/m².

7. Revêtement ou enduit selon l'une des revendications précédentes, recouvert d'une fine couche à fonction esthétique, d'une épaisseur inférieure à 2 mm, par exemple une couche de peinture, une couche de mastic, une couche de papier peint, une couche de mortier, ou d'une épaisseur inférieure à 10 mm, par exemple une couche de carrelage.

8. Revêtement ou enduit selon l'une des revendications précédentes, dans lequel le composé conducteur électrique est choisi parmi les composés carbonés, les éléments métalliques non carbonés et/ou d'autres minéraux conducteurs.

9. Revêtement ou enduit selon la revendication 8, dans lequel le composé conducteur électrique est un composé carboné choisi parmi le graphite, le noir de carbone, et/ou le coke, se présentant sous la forme de particules, de poudre ou de fibre.

10. Revêtement ou enduit selon la revendication 9, dans lequel le composé carboné est du graphite sous forme de particules dont le diamètre moyen de préférence inférieur à 1800 µm.

11. Revêtement ou enduit selon la revendication 8, dans lequel le composé conducteur électrique est un élément métallique non carboné de préférence choisi parmi l'aluminium, le cuivre, le titane, le fer ainsi que des alliages tel que l'acier, sous forme de fibres ou de poudre.

12. Revêtement ou enduit selon la revendication 8, dans lequel le minéral conducteur est choisi parmi la bentonite et/ou la marconite et a de préférence un diamètre moyen de particules compris entre 100 µm et 1000 µm.

13. Revêtement ou enduit selon l'une des revendications précédentes, tel que la composition de mortier hydraulique comprend des cendres volantes.

14. Revêtement ou enduit selon l'une des revendications précédentes, tel que la composition de mortier hydraulique comprend le mélange de graphite particulaire, de cendres volantes et de granulat conducteur tel que la bentonite ou la marconite.

15. Revêtement ou enduit selon la revendication précédente, tel que la composition de mortier hydraulique comprend entre 3 et 10 % en poids de graphite particulaire dont la taille des particules est comprise entre 500 et 1800 µm, de 10 à 45% en poids d'un minéral conducteur choisi parmi la bentonite et/ou la marconite et dont le diamètre moyen des particules est compris entre 100 et 1000 µm et entre 20 et 40% en poids de cendres volantes.

16. Revêtement ou enduit selon l'une des revendications précédentes, tel que le liant hydraulique est un liant minéral choisi parmi les ciments Portland, les ciments de mélange comprenant des cendres volantes, des laitiers, des pouzzolanes naturelles ou calcinées, les ciments alumineux, les ciments sulfoalumineux, les ciments belitiques, la chaux hydraulique, le sulfate de calcium, sous forme anhydrite et/ou hemihydrate, seuls ou en mélange.

17. Revêtement ou enduit selon l'une des revendications précédentes, tel que la composition de mortier hydraulique comprend en outre des additifs tels que des agents rhéologiques comme les plastifiants ou les superplastifiants, des agents fluidifiants, des agents rétenteurs d'eau, des agents épaississants, des agents de protection biocides et/ou fongicides, des agents dispersants, des pigments organiques et/ou inorganiques, des accélérateurs et/ou retardateurs de prise, des agents hydrofuges, des agents-anti-moussants ou des fibres.

18. Revêtement ou enduit selon l'une des revendications précédentes, tel que la composition de mortier hydraulique comprend en outre des charges ou fillers calcaires, siliceux et/ou siliceux calcaires.

19. Procédé de fabrication d'un revêtement de finition pour sol ou d'un enduit mural de finition chauffant appliqué sur un support selon l'une des revendications précédentes, **caractérisé en ce qu'**il comprend les étapes de :
- positionnement d'un câblage linéaire de fils conducteurs (2), sur le support destiné à recevoir le revêtement ou l'enduit de finition, et connecté à une source d'alimentation électrique continue délivrant une tension maximale de 60 V,
- application sur le support de la composition de mortier hydraulique,
- durcissement de la composition de mortier hydraulique pour former le revêtement de finition pour sol ou l'enduit mural de finition.

20. Procédé selon la revendication 19, dans lequel l'espacement entre les fils conducteurs (2) dans le câblage linéaire est d'au moins 0,2 m, de préférence est compris entre 0,5 m et 1 m.

21. Procédé selon l'une des revendications de procédé précédente, dans lequel l'application est faite par coulage, ou par projection, de façon manuelle ou automatisée.

22. Procédé selon l'une des revendications de procédé précédente, tel que l'épaisseur du revêtement ou de l'enduit de finition est comprise entre 2 et 20 mm, de préférence entre 5 et 15 mm.

## Patentansprüche

1. Oberbelag für einen Boden oder Innenwandüberzug,
**dadurch gekennzeichnet, dass** der aus einer linearen Verdrahtung von elektrisch leitfähigen Drähten (2) und einer Heizschicht besteht, die auf einem Träger positioniert ist und durch Aushärten einer Zusammensetzung aus hydraulischem Mörtel erhalten wird, umfassend mindestens ein hydraulisches Bindemittel und mindestens eine elektrisch leitfähige Verbindung, wobei die Schicht in Kontakt mit der Verdrahtung steht, die einen Gleichstrom mit einer maximalen Spannung von 60 V aufweist, gespeist wird.

2. Belag oder Überzug nach dem vorstehenden Anspruch, wobei die elektrisch leitfähigen Drähte (2) in einem Abstand von mindestens 0,2 m, vorzugsweise in einem Abstand zwischen 0,5 m und 1,5 m, voneinander beabstandet sind.

3. Belag oder Überzug nach einem der vorstehenden Ansprüche, wobei die leitfähigen Drähte (2) feine Metalldrähte oder feine Metallbänder sind, zum Beispiel mit einem Durchmesser oder einer Breite von weniger als 5 mm, zum Beispiel aus Kupfer.

4. Belag oder Überzug nach einem der vorstehenden Ansprüche, wobei die lineare Verdrahtung an den Randbereichen der Boden- oder Wandoberfläche mit einem Gleichstrom, der eine maximale Spannung von 60 V aufweist, gespeist wird, vorzugsweise an dem Teil der Boden- oder Wandoberfläche nahe dem zu belegenden Träger.

5. Belag oder Überzug nach einem der vorstehenden Ansprüche, wobei die von der Schicht dissipierte Oberflächenleistung größer als 20 W/m² ist.

6. Belag oder Überzug nach dem vorstehenden Anspruch, wobei die durch die Schicht dissipierte Oberflächenleistung etwa 100 W/m² beträgt.

7. Belag oder Überzug nach einem der vorstehenden Ansprüche, bedeckt mit einer feinen Schicht mit ästhetischer Funktion mit einer Dicke von weniger als 2 mm, zum Beispiel einer Farbschicht, einer Spachtelschicht, einer Tapetenschicht, einer Mörtelschicht oder mit einer Dicke von weniger als 10 mm, zum Beispiel einer Fliesenschicht.

8. Belag oder Überzug nach einem der vorstehenden Ansprüche, wobei die elektrisch leitfähige Verbindung ausgewählt ist aus kohlenstoffhaltigen Verbindungen, nicht kohlenstoffhaltigen metallischen Elementen und/oder anderen leitfähigen Mineralien.

9. Belag oder Überzug nach Anspruch 8, wobei die elektrisch leitfähige Verbindung eine kohlenstoffhaltige Verbindung ist, ausgewählt aus Graphit, Ruß und/oder Koks, die in Form von Partikeln, Pulver oder Fasern vorliegt.

10. Belag oder Überzug nach Anspruch 9, wobei die kohlenstoffhaltige Verbindung Graphit in Form von Partikeln ist, deren mittlerer Durchmesser vorzugsweise kleiner als 1800 µm ist.

11. Belag oder Überzug nach Anspruch 8, wobei die elektrisch leitfähige Verbindung ein nicht kohlenstoffhaltiges metallisches Element ist, vorzugsweise ausgewählt aus Aluminium, Kupfer, Titan, Eisen sowie Legierungen wie Stahl, in Form von Fasern oder Pulver.

12. Belag oder Überzug nach Anspruch 8, wobei das leitfähige Mineral ausgewählt ist aus Bentonit und/oder Marconit und vorzugsweise einen mittleren Teilchendurchmesser zwischen 100 µm und 1000 µm aufweist.

13. Belag oder Überzug nach einem der vorstehenden Ansprüche, wobei die Zusammensetzung des hydraulischen Mörtels Flugasche umfasst.

14. Belag oder Überzug nach einem der vorstehenden Ansprüche, wobei die Zusammensetzung aus hydraulischem Mörtel die Mischung aus partikulärem Graphit, Flugasche und leitfähigem Granulat wie Bentonit oder Marconit umfasst.

15. Belag oder Überzug nach dem vorstehenden Anspruch, wobei die Zusammensetzung aus hydraulischem Mörtel zwischen 3 und 10 Gew.-% partikulären Graphit, dessen Teilchengröße zwischen 500 und 1800 µm liegt, zu 10 bis 45 Gew.-% ein leitfähiges Mineral, das ausgewählt ist aus Bentonit und/oder Marconit und dessen mittlerer Teilchendurchmesser zwischen 100 und 1000 µm liegt, und zwischen 20 und 40 Gew.-% Flugasche umfasst.

16. Belag oder Überzug nach einem der vorstehenden Ansprüche, wobei das hydraulische Bindemittel ein mineralisches Bindemittel ist, ausgewählt aus Portlandzementen, die Mischzemente umfassend Flugasche, Schlacken, natürliche oder calcinierte Puzzolane, Aluminatzemente, Sulfoaluminatzemente, Belitzemente, hydraulischen Kalk, Calciumsulfat in Form von Anhydrit und/oder Hemihydrat, einzeln oder als Mischung.

17. Belag oder Überzug nach einem der vorstehenden Ansprüche, wobei die Zusammensetzung des hydraulischen Mörtels ferner Additive, wie rheologische Mittel wie Plastifizierungsmittel oder Superplastifizierungsmittel, Verflüssiger, Wasserrückhaltemittel, Verdickungsmittel, biozide und/oder fungizide Schutzmittel, Dispergiermittel, organische und/oder anorganische Pigmente, Abbindebeschleuniger und/oder -verzögerer, Hydrophobierungsmittel, Antischaummittel oder Fasern, umfasst.

18. Belag oder Überzug nach einem der vorstehenden Ansprüche, wobei die Zusammensetzung des hydraulischen Mörtels ferner kalkhaltige, kieselsäurehaltige und/oder kalk-kieselsäurehaltige Füllstoffe oder Filler umfasst.

19. Verfahren zum Herstellen eines erwärmenden Oberbelags für einen Boden oder Innenwandendüberzugs, aufgebracht auf einen Träger nach einem der vorstehenden Ansprüche, **dadurch gekennzeichnet, dass** es die Schritte umfasst:
- Positionieren einer linearen Verdrahtung von leitfähigen Drähten (2) auf dem Träger, der dafür vorgesehen ist, den Oberbelag oder -überzug aufzunehmen, und die an eine elektrische Gleichstromquelle angeschlossen ist, die eine maximale Spannung von 60 V liefert,
- Aufbringen der hydraulischen Mörtelzusammensetzung auf den Träger,
- Aushärten der hydraulischen Mörtelzusammensetzung zum Ausbilden des Oberbelags für einen Boden oder des Innenwandendüberzugs.

20. Verfahren nach Anspruch 19, wobei der Abstand zwischen den leitfähigen Drähten (2) in der linearen Verdrahtung mindestens 0,2 m beträgt, vorzugsweise zwischen 0,5 m und 1 m liegt.

21. Verfahren nach einem der vorstehenden Verfahrensansprüche, wobei das Aufbringen durch Gießen oder durch Spritzen manuell oder automatisiert erfolgt.

22. Verfahren nach einem der vorstehenden Verfahrensansprüche, wobei die Dicke des Belags oder des Endüberzugs zwischen 2 und 20 mm, vorzugsweise zwischen 5 und 15 mm, liegt.

## Claims

1. Floor finishing coat or interior wall plaster, **characterized in that** it consists of a linear wiring of electrically conductive wires (2) and a heating layer positioned on a support and obtained by hardening a hydraulic mortar composition comprising at least one hydraulic binder and at least one electrically conductive compound, said layer being in contact with said wiring powered by a direct current having a maximum voltage of 60 V.

2. Coat or plaster according to the preceding claim, **characterized in that** the electrically conductive wires (2) are spaced apart from one another by a distance of at least 0.2 m, preferably by a distance of between 0.5 m and 1.5 m.

3. Coat or plaster according to either of the preceding claims, **characterized in that** the conductive wires (2) are thin metal wires or thin metal strips, for example of less than 5 mm in diameter or width, for example made of copper.

4. Coat or plaster according to one of the preceding claims, **characterized in that** the linear wiring is powered at the peripheral zones of the surface of the floor or wall by a direct current having a maximum voltage of 60 V, preferably at the part of the surface of the floor or wall close to the support to be coated.

5. Coat or plaster according to one of the preceding claims, **characterized in that** the surface power dissipated by said layer is greater than 20 W/m².

6. Coat or plaster according to the preceding claim, **characterized in that** the surface power dissipated by said layer is around 100 W/m².

7. Coat or plaster according to one of the preceding claims, **characterized in that** it is covered with a thin layer having an aesthetic function, with a thickness of less than 2 mm, for example a layer of paint, a layer of mastic, a layer of wallpaper, a layer of mortar, or with a thickness of less than 10 mmn for example a layer of tiles.

8. Coat or plaster according to one of the preceding claims, **characterized in that** the electrically conductive compound is chosen from carbon-containing compounds, non-carbon-containing metallic elements and/or other conductive minerals.

9. Coat or plaster according to Claim 8, **characterized in that** the electrically conductive compound is a carbon-containing compound chosen from graphite, carbon black, and/or coke, that is in the form of particles, powder or fibre.

10. Coat or plaster according to Claim 8, **characterized in that** the carbon-containing compound is graphite in the form of particles, the mean diameter of which is preferably less than 1800 µm.

11. Coat or plaster according to one of Claims 8 to 10, **characterized in that** the electrically conductive compound is a non-carbon-containing metallic element preferably chosen from aluminium, copper, titanium, iron and also alloys such as steel, in the form of fibres or powder.

12. Coat or plaster according to one of Claims 8 to 11, **characterized in that** the conductive mineral is chosen from bentonite and/or marconite and preferably has a mean particle diameter of between 100 µm and 1000 µm.

13. Coat or plaster according to one of the preceding claims, **characterized in that** the hydraulic mortar composition comprises fly ash.

14. Coat or plaster according to one of the preceding claims, **characterized in that** the hydraulic mortar composition comprises the mixture of particulate graphite, fly ash and conductive aggregate such as bentonite or marconite.

15. Coat or plaster according to the preceding claim, **characterized in that** the hydraulic mortar composition comprises between 3 and 10% by weight of particulate graphite, the particle size of which is between 500 and 1800 µm, from 10 to 45% by weight of a conductive mineral chosen from bentonite and/or marconite and the mean particle diameter of which is between 100 and 1000 µm and between 20 and 40% by weight of fly ash.

16. Coat or plaster according to one of the preceding claims, **characterized in that** the hydraulic binder is a mineral binder chosen from Portland cements, blended cements comprising fly ash, slags, natural or calcined pozzolans, high-alumina cements, sulfoaluminate cements, belite cements, hydraulic lime, calcium sulfate in anhydrite and/or hemihydrate form, alone or as a mixture.

17. Coat or plaster according to one of the preceding claims, **characterized in that** the hydraulic mortar composition additionally comprises additives such as rheological agents like plasticizers or superplasticizers, fluidifiers, water-retaining agents, thickeners, biocidal and/or fungicidal protective agents, dispersants, organic and/or inorganic pigments, setting accelerators and/or retarders, water-repellent agents, defoamers or fibres.

18. Coat or plaster according to one of the preceding claims, **characterized in that** the hydraulic mortar composition additionally comprises calcareous, siliceous and/or siliceous-calcareous fillers.

19. Process for manufacturing a heated floor finishing coat or a heated finishing wall plaster applied to a support according to one of the preceding claims, **characterized in that** it comprises the steps of:
- positioning a linear wiring of conductive wires (2), on the support intended to receive the finishing coat or plaster, and connected to a DC power supply source delivering a maximum voltage of 60 V,
- applying the hydraulic mortar composition to the support,
- hardening the hydraulic mortar composition to form the floor finishing coat or finishing wall plaster.

20. Process according to Claim 19, **characterized in that** the spacing between the conductive wires (2) in the linear wiring is at least 0.2 m, and preferably is between 0.5 m and 1 m.

21. Process according to one of the preceding process claims, **characterized in that** the application is carried out by pouring, or by spraying, manually or in an automated manner.

22. Process according to one of the preceding process claims, **characterized in that** the thickness of the finishing coat or plaster is between 2 and 20 mm, preferably between 5 and 15 mm.
